# EUROPÄISCHE PATENTANMELDUNG

(11) **EP 2 527 061 A1**
(43) Veröffentlichungstag der Anmeldung: **28.11.2012**
(21) Anmeldenummer: 11167869.4
(22) Anmeldetag: 27.05.2011
(51) Int. Cl.: B22D 11/124, B22D 11/22, B05B 1/08, F15B 21/12, F16K 31/06, F16K 31/126

(54) **Verfahren zur Kühlung eines metallischen Strangs und Schaltventil zum intermittierenden Öffnen und Schließen eines Volumenstroms eines Kühlmediums**

(71) Anmelder: Siemens VAI Metals Technologies GmbH, 4031 Linz (AT)
(72) Erfinder: Ladner, Peter, 4060 Leonding (AT); Mairhofer, Markus, 4040 Linz (AT); Scheidl, Rudolf, Professor, 3253 ERLAUF (AT); Wahl, Helmut, 4222 Luftenberg (AT)
(74) Vertreter: Maier, Daniel Oliver

(57) **Zusammenfassung**

Die Erfindung betrifft ein Verfahren zur Kühlung eines metallischen Strangs in einer Strangführung einer Stranggießmaschine, sowie ein Schaltventil zum intermittierenden Öffnen und Schließen eines Volumenstroms eines Kühlmediums. Die Aufgabe der Erfindung besteht darin, ein Verfahren zur Kühlung eines metallischen Strangs in einer Strangführung und ein Schaltventil zum intermittierenden Öffnen und Schließen eines Volumenstroms eines Kühlmediums anzugeben, mit denen die Kühlintensität in einem großen Bereich auf einfache, robuste und energieeffiziente Weise eingestellt werden kann. Diese Aufgabe wird durch folgende Verfahrensschritte aufweist:
- aktives Ansteuern eines schaltbaren Schaltventils (1) durch ein binäres Steuersignal (5), wobei die Ansteuerung in Abhängigkeit einer gewünschten Kühlleistung erfolgt;
- Betätigen eines Schaltelements (16) des Schaltventils in Abhängigkeit des Steuersignals (5), wobei das Schaltelement (16) in Abhängigkeit des Steuersignals (5) von einer geschlossenen Stellung in eine geöffnete Stellung oder vice versa gebracht wird, und der Durchfluss eines Kühlmediums (21) durch das Schaltventil (1) bei einer geöffneten Stellung des Schaltelements (16) geöffnet und bei einer geschlossenen Stellung des Schaltelements (16) geschlossen ist; anschließend
- intermittierendes Ausbringen des Kühlmediums (21) über eine Kühldüse (2) auf den Strang (3).

## Beschreibung

### Gebiet der Technik

Die Erfindung betrifft ein Verfahren zur Kühlung eines metallischen Strangs, vorzugsweise eines Stahlstrangs, in einer Strangführung einer Stranggießmaschine, sowie ein Schaltventil zum intermittierenden Öffnen und Schließen eines Volumenstroms eines Kühlmediums.

### Stand der Technik

Beim Stranggießen ist es notwendig, den kontinuierlich vergossenen Stahlstrang, der zumindest eine tragfähige Strangschale aufweist, in der Strangführung der Stranggießmaschine zu führen, stützen und durch eine Sekundärkühlung weiter abzukühlen. Dabei ist es bekannt, entweder ein flüssiges Kühlmedium (typischerweise Wasser, sog. "water only" Kühlung) oder ein Gemisch aus flüssigem Kühlmedium und einem Gas (sog. "air mist" Kühlung, wobei das Gas typischerweise Luft ist) mittels einer Kühldüse auf den Strang aufzubringen. Bei den sog. "water only" Düsen kann die Kühlintensität in Abhängigkeit des Wasserdrucks in einem kleinen Bereich verstellt werden. Nachteilig daran ist allerdings, dass sich das Spritzbild in Abhängigkeit des Wasserdrucks ebenfalls verändert, wobei durch die inhomogene Wärmeabfuhr eine gleichmäßige Oberflächentemperatur des Strangs nicht gewährleistet ist. Ziel der sogenannten "air mist" Düsen ist es, die Spreizung zwischen der maximalen und minimalen Durchflussmenge an Kühlmittel durch die Spritzdüsen zu erhöhen; in der Praxis hat sich allerdings herausgestellt, dass eine höhere Spreizung als 10:1 für "air mist" Düsen bzw. 3:1 für "water only" Düsen schwer erreichbar ist. Dies kann für gewisse Stahlsorten jedoch zu einer Überkühlung vor allem der Strangkanten und somit zu Qualitätseinbußen führen. Außerdem ist der Energieverbrauch für die Bereitstellung von Druckluft für die "air mist" Düsen sehr hoch, sodass sich einerseits ein erhöhter CO₂ Ausstoß und andererseits höhere Kosten für den Betrieb der Anlage ergeben.

Aus der EP 2 010 347 B1 ist bekannt, verfahrbare Kühldüsen in der Strangführung einzusetzen. Nachteilig daran ist, dass die Auflösung der Kühlmittelverteilung über der Breitseite des Strangs unzureichend ist. Außerdem weisen verfahrbare Kühldüsen eine aufwändige und komplexe Konstruktion auf, zumal insbesondere bewegliche Teile mit Lagern und Gelenken unter den extrem rauen Umgebungsbedingungen beim Stranggießen Probleme verursachen.

Aus der DE 199 28 936 C2 ist ein Verfahren und eine Vorrichtung zum Kühlen eines Stahlstrangs in einer Strangführung bekannt, wobei der Strang durch intermittierendes Spritzen einer Kühlmitteldüse abgekühlt wird. Nachteilig an diesen Kühlmitteldüsen ist, dass der Durchfluss durch die Kühlmitteldüsen nicht aktiv gestellt werden kann, sodass insbesondere große Spreizungen zwischen den maximalen und der minimalen Kühlmittelmengen, die durch die Kühlmitteldüsen auf den Strang ausgebracht werden, nicht realisiert werden können. Da die Kantenbereiche eines Stahlstrangs zur Erzielung einer konstanten Oberflächentemperatur wesentlich weniger stark abgekühlt werden müssen als der zentrale Bereich des Strangs, führt die Verwendung der bekannten Vorrichtung zu einer Überkühlung, d.h. zu starken Abkühlung, der Kantenbereiche, worunter die Qualität des Stahlstrangs leidet.

### Zusammenfassung der Erfindung

Die Aufgabe der Erfindung besteht darin, die Nachteile des Stands der Technik zu überwinden und ein Verfahren zur Kühlung eines metallischen Strangs in einer Strangführung einer Stranggießmaschine, sowie ein Schaltventil zum intermittierenden Öffnen und Schließen eines Volumenstroms eines Kühlmediums anzugeben, mit denen die Kühlintensität in einem großen Bereich auf einfache, robuste und energieeffiziente Weise eingestellt werden kann.

Diese Aufgabe wird durch ein Verfahren nach Anspruch 1 gelöst, das folgende Verfahrensschritte aufweist:
- aktives Ansteuern eines schaltbaren Schaltventils durch ein binäres Steuersignal, wobei die Ansteuerung in Abhängigkeit einer gewünschten Kühlleistung erfolgt;
- Betätigen eines Schaltelements des Schaltventils in Abhängigkeit des Steuersignals, wobei das Schaltelement in Abhängigkeit des Steuersignals von einer geschlossenen Stellung in eine geöffnete Stellung oder vice versa gebracht wird, und der Durchfluss eines Kühlmediums durch das Schaltventil in einer geöffneten Stellung des Schaltelements geöffnet und in einer geschlossenen Stellung des Schaltelements geschlossen ist; anschließend
- intermittierendes Ausbringen des Kühlmediums über eine Kühldüse auf den Strang.

Dabei wird ein aktiv schaltbares Schaltventil durch ein binäres Steuersignal (eine zeitliche Abfolge von Null- und Eins-Werten) aktiv angesteuert, wobei die Ansteuerung, konkret das Steuersignal, in Abhängigkeit der gewünschten Kühlleistung erfolgt. In Abhängigkeit des Steuersignals wird ein Schaltelement, das beispielsweise als ein Ventilschieber eines Schieberventils oder ein Steuerkolben eines Sitzventils ausgebildet sein kann, betätigt, wobei der Durchfluss des Kühlmediums durch das Schaltventil in Abhängigkeit der Stellung des Schaltelements entweder geöffnet oder geschlossen wird. Unter einer geöffneten Stellung des Schaltelements versteht man jene Stellung, bei der der Durchfluss des Kühlmediums durch das Schaltventil geöffnet ist; andererseits versteht man unter einer geschlossenen Stellung des Schaltelements jene Stellung, bei der der Durchfluss des Kühlmediums durch das Schaltventil geschlossen ist. Anschließend wird das Kühlmedium intermittierend auf den Strang ausgebracht bzw. aufgespritzt. Durch die Betätigung wird das Schaltelement typischerweise verschoben, jedoch sind dem Fachmann auch Schaltventile bekannt, bei denen das Schaltelement bei Betätigung verdreht wird.

Durch die aktive Betätigung des Schaltelements, das dem Schaltventil zugeordnet ist, ist eine extrem hohe Spreizung der Kühlintensität bis zu 20:1 (verglichen mit 10:1 nach dem Stand der Technik) bereits ohne eine Druckänderung des Kühlmediums darstellbar. Ein weiterer Vorteil dieses Verfahrens besteht darin, dass der volle Druck des Kühlmediums bei geöffnetem Schaltelement unmittelbar (bis auf kleine Druckabfälle im Schaltventil, die jedoch vernachlässigt werden können) an der Kühldüse anliegt, sodass ein konstantes Spritzbild auch bei niedrigen Kühlleistungen gewährleistet ist. Weiters kann auf die Verwendung von "air mist" Düsen weitgehend verzichtet werden, sodass die Strangkühlung energieeffizienter erfolgt. Die Erfindung ist jedoch keineswegs auf "water only" Düsen beschränkt; vielmehr können natürlich auch "air mist" Düsen zum Einsatz kommen. Nach einer einfachen und zweckmäßigen Ausführungsform ist das binäre Steuersignal ein pulsweitenmoduliertes Steuersignal. Dem Fachmann sind jedoch auch andere Modulationsarten bekannt, beispielsweise die Puls Frequenz Modulation (PFM), die potenziell für das binäre Steuersignal einsetzbar wären.

Um die Anzahl von Schaltventilen zu reduzieren, ist es möglich, dass mehrere, z.B. in Gießrichtung benachbart hintereinander angeordnete, benachbart quer zur Gießrichtung angeordnete, oder symmetrisch zur Mittelachse des Strangs angeordnete Kühldüsen durch ein Schaltventil mit Kühlmedium versorgt werden.

Zur Erzielung einer bestmöglichen Verteilung der Kühlmittelmenge über der Strangoberfläche versorgt jeweils ein Schaltventil eine (einzige) Kühldüse mit Kühlmedium. Vorzugsweise weisen die Kühldüsen in einem Rollenspalt einen Abstand von ca. 100mm zueinander auf.

Nach einer einfachen, kostengünstigen und kompakten Ausführungsform wird das Schaltelement direkt, insbesondere elektromagnetisch, betätigt.

Nach einer alternativen Ausführungsform wird das Schaltelement indirekt, insbesondere pneumatisch oder hydraulisch vorgesteuert, betätigt. Pneumatische und hydraulische Vorsteuerventile sind weltweit verfügbar und bei Störung schnell austauschbar.

Nach einer energieeffizienten Ausführungsform weist das Schaltventil einen pneumatischen Steueranschluss auf, der alternativ zwei unterschiedliche Druckniveaus verbindet, wobei das niedrigere Druckniveau größer als der Umgebungsdruck ist. Demnach kann die abgeblasene Abblasluft des Vorsteuerventils zum Kompressor rückgeführt werden, wodurch Energie eingespart werden kann, oder - was gerätetechnisch einfacher ist - von diesem niedrigerem Druckniveau über entsprechende Drosseleinrichtungen, z.B. über ein Druckbegrenzungsventil, zur Umgebung hin abgelassen werden.

Nach einer alternativen Ausführungsform weist das Schaltventil einen hydraulischen Steueranschluss auf, der alternativ zwei unterschiedliche Druckniveaus verbindet.

Bei einer einfachen Anordnung kommuniziert eine zentrale Steuerung der Stranggießmaschine mit mehreren dezentralen Steuereinheiten, vorzugsweise über ein Bussystem, wobei jeweils einer Steuereinheit ein oder mehrere Schaltventile zugeordnet sind.

Es hat sich als günstig erwiesen, dass die Ansteuerung zumindest eines aus der Gruppe einer Trägerfrequenz des pulsweitenmodulierten Steuersignals und eines Pulsweiten-Verhältnisses des pulsweitenmodulierten Steuersignals in Abhängigkeit von einem Strangalter oder einer Strangposition des Strangs erfolgt. Natürlich könnte die Ansteuerung auch in Abhängigkeit einer Schalenstärke und/oder eines Temperaturprofils erfolgen.

Zur Erzielung einer noch höheren Spreizung zwischen der maximalen und minimalen Kühlintensität ist es möglich, dass der Druck des Kühlmediums in Abhängigkeit der gewünschten Kühlleistung (z.B. in einem Bereich 1:3) verändert wird.

Zur Erzielung einer gleichmäßigen Oberflächentemperatur des Strangs ist es günstig, wenn vor der Ansteuerung des aktiv schaltbaren Schaltventils durch ein binäres Steuersignal folgende Verfahrensschritte durchgeführt werden:
- Ermitteln einer Temperatur des Strangs T, vorzugsweise einer Oberflächentemperatur des Strangs in einem Auftreffbereich des aus der Kühldüse austretenden Kühlmediums;
- Bestimmen eines Regelfehlers *e*=*T_{Soll-}T* unter Berücksichtigung einer Solltemperatur des Strangs *T_{Soll};*
- Berechnen einer Stellgröße *u* mittels einer Regeleinrichtung in Abhängigkeit des Regelfehlers e, wobei die gewünschte Kühlleistung über das Steuersignal in Abhängigkeit der Stellgröße u eingestellt wird.

Für die Zuverlässigkeit des Schaltventils und der Kühldüse ist es günstig, wenn der Raum zwischen dem Schaltventil und der Kühldüse bei der geschlossenen Stellung des Schaltelements mit Luft ausgeblasen wird.

Die erfindungsgemäße Aufgabe wird ebenfalls durch ein Schaltventil nach Anspruch 10 gelöst, aufweisend:
- ein druckdichtes Ventilgehäuse, umfassend zumindest eine Eintrittsöffnung zum Einführen eines Kühlmediums in das Ventilgehäuse und zumindest eine Austrittsöffnung zum Ausführen eines Kühlmediums aus dem Ventilgehäuse;
- ein Schaltelement zum Öffnen und Schließen der Austrittsöffnung, wobei das Schaltelement gegenüber dem Ventilgehäuse beweglich ausgebildet ist; und
- eine Betätigungseinrichtung zum Betätigen des Schaltelements in Abhängigkeit des Steuersignals.

Dabei weist das Schaltventil ein druckdichtes Ventilgehäuse mit einem Schaltelement zum Öffnen und Schließen einer Austrittsöffnung auf. Das Schaltelement kann mittels einer Betätigungseinrichtung in Abhängigkeit des Steuersignals von einer geöffneten Stellung - in der die Austrittsöffnung geöffnet ist - in eine geschlossene Stellung - in der die Austrittsöffnung geschlossen ist - und vice versa bewegt werden. Mittels einer Eintrittsöffnung kann ein Kühlmedium in das Innere des Ventilgehäuse eingeführt und mittels der Austrittsöffnung kann das Kühlmedium wiederum aus dem Inneren des Ventilgehäuses ausgeführt und einer Kühldüse zugeführt werden.

Zur Erzielung eines gleichmäßigen Spritzbilds ist es zweckmäßig, wenn die Austrittsöffnung mit einer Kühldüse zum Ausbringen des Kühlmediums auf den metallischen Strang verbunden ist. Für einen raschen Druckaufbau des Kühlmediums ist es vorteilhaft, wenn die Austrittsöffnung des Schaltventils - in Durchflussrichtung des Kühlmediums - unmittelbar vor der Kühldüse angeordnet ist.

Es ist möglich, dass die Austrittsöffnung mit mehreren Kühldüsen zum Ausbringen des Kühlmediums auf einen metallischen Strang verbunden. Damit wird das Verhältnis der Anzahl der Schaltventile pro Kühldüse reduziert.

Es ist grundsätzlich möglich, das Schaltelement als ein Schieberventil oder als ein Sitzventil auszuführen. Vorteilhaft an der Ausbildung als Sitzventil ist, dass das Kühlmedium ohne weitere Ventile leckagefrei abgedichtet wird und dass eine höhere Unempfindlichkeit gegenüber Verschmutzung gegeben ist.

Bei der Ausbildung des Schaltelements als Sitzventil ist es vorteilhaft, wenn das Schaltelement einen Steuerkolben umfasst, wobei ein Balg oder eine Membran den Steuerkolben gegenüber dem Ventilgehäuse führt und gegebenenfalls abdichtet.

Vorzugsweise besteht die Membran oder der Balg aus rostfreiem Metall, vorzugsweise Stahl, oder aus Kunststoff, vorzugweise warmfestem Kunststoff, der bis zu Temperaturen größer 250°C nennenswerte Festigkeiten aufweist, wie z.B. Polyimid oder Polyaryletherketone (PEEK).

Es ist grundsätzlich möglich, die Betätigungseinrichtung als eine elektrische Betätigungseinrichtung, vorzugsweise einen Elektromagnet, eine pneumatische Betätigungseinrichtung, vorzugsweise ein 3/2 Wege Pneumatikventil oder zwei 2/2 Wege Pneumatikventile, oder als eine hydraulische Betätigungseinrichtung, vorzugsweise ein 3/2 Wege Hydraulikventil oder zwei 2/2 Wege Hydraulikventile, auszubilden.

Zweckmäßigerweise ist ein Steueranschluss des Schaltventils bzw. des Vorsteuerventils mit einer Steuereinrichtung signaltechnisch, vorzugsweise über eine digitale Schnittstelle, verbunden, wobei der Steueranschluss z.B. als ein PWM Eingang ausgebildet ist.

Bei einer für die Wartung günstigen Ausführungsform, sind die Steuerungsfunktionen zur Ansteuerung und gegebenenfalls die Diagnosefunktionen zur Fehlerdiagnose für zumindest ein Schaltventil in einer dezentralen Steuereinheit zusammengefasst, wobei die dezentrale Steuereinheit mit einer zentralen Steuerung, vorzugsweise über eine Busverbindung, verbunden ist.

Montagetechnisch ist es günstig, mehrere Schaltventile in einem Rollenspalt eines Strangführungssegments anzuordnen und zu einer baulichen Einheit zusammenzufassen. Dabei ist es vorteilhaft, zentrale Anschlüsse für die Druckluft, das Kühlmedium und gegebenenfalls die Elektrik vorzusehen.

Da die Soll-Durchflusscharakteristik der Kühldüse bekannt ist bzw. einfach bestimmt werden kann (vgl. Backe: Grundlagen der Ölhydraulik), ist es einfach möglich, eine Funktionskontrolle für ein Schaltventil bzw. eine Kühldüse durchzuführen: Dabei wird einem oder mehreren Schaltventilen ein Durchflussmesser zur Bestimmung der Durchflussmenge durch das Schaltventil zugeordnet und die Schaltventile einzeln geöffnet; durch die geschlossenen Schaltventile strömt somit kein Volumenstrom. Falls nun eine Kühldüse bzw. ein Schaltventil defekt ist, erlaubt ein Soll-Ist-Vergleich der Durchflussmengen eine eindeutige Identifikation der betroffenen Kühldüse bzw. des Schaltventils. Es ist vorteilhaft, diese Test-Schaltsequenzen in Gießpausen periodisch durchzuführen, sodass ein Defekt bzw. eine Funktionsminderung frühzeitig erkannt wird. Es ist sogar möglich, den Betrieb der Stranggießmaschine mit einer defekten Kühldüse bzw. Schaltventil fortzuführen, in dem das Pulsweiten-Verhältnis κ (auch bekannt unter "duty cycle") für benachbarte Kühldüsen erhöht wird. Somit kann der Austausch einer defekten Kühldüse bzw. eines Schaltventils beim nächsten eingeplanten Anlagenstillstand erfolgen, ohne dass die Qualität des Strangs negativ beeinflusst wird. Aus der AT 505035 B1 ist die Vermessung einer Strömungskennlinie ohne Durchflussmessung bekannt; natürlich wäre auch dieses Verfahren zur Funktionskontrolle verwendbar.

Für die Robustheit bzw. den Schutz vor Verschmutzungen ist es vorteilhaft, wenn der Steuerkolben wenigstens eine Ausblasöffnung zum Ausblasen - mittels einer pneumatischen Steuerluft oder einer separaten Ausblasluft - des Raums zwischen dem Schaltventil und der Kühldüse aufweist.

Hierbei ist es günstig, wenn der Ausblasöffnung ein Rückschlagventil zugeordnet ist, sodass z.B. das Kühlmedium nicht in die Ausblasöffnung eindringen kann.

### Kurze Beschreibung der Zeichnungen

Weitere Vorteile und Merkmale der vorliegenden Erfindung ergeben sich aus der nachfolgenden Beschreibung nicht einschränkender Ausführungsbeispiele, wobei auf die folgenden Figuren Bezug genommen wird, die Folgendes zeigen:
Fig 1: eine Anordnung von sechs Kühldüsen über der Breitseite einer Bramme, wobei jeder Kühldüse ein Schaltventil zugeordnet ist,
Fig 2: eine Darstellung eines pulsweiten modulierten Steuersignals und der Durchflussmenge durch eine Kühldüse über der Zeit,
Fig 3: eine Darstellung eines Schaltventils und einer Kühldüse, wobei das Schaltventil durch ein Pneumatikventil vorgesteuert wird,
Fig 4: eine Darstellung zweier Schaltventile und zweier Kühldüsen, wobei die Schaltventile durch ein Pneumatikventil vorgesteuert werden,
Fig 5 und 6: ein pneumatisch vorgesteuertes Schaltventil mit einem Membranbalg jeweils in offener und geschlossener Stellung,
Fig 7a und 7b: ein elektromagnetisch direkt betätigtes Schaltventil mit einem Wellenbalg jeweils in geschlossener und offener Stellung,
Fig 8a und 8b: ein pneumatisch betätigtes Schaltventil mit einer Membrane jeweils in offener und geschlossener Stellung,
Fig 9a und 9b: ein elektromagnetisch direkt betätigtes Schaltventil mit einer Membrane jeweils in offener und geschlossener Stellung,
Fig 10a und 10b: ein Steuerkolben eines Schaltventils mit Bohrungen zum Ausblasen mit Steuerluft jeweils in offener und geschlossener Stellung,
Fig 11 und 12: eine Anordnung von 22 Kühldüsen über die Breitseite einer Bramme, wobei jeweils zwei symmetrisch zur Mittelachse der Breitseite positionierten Kühldüsen ein gemeinsames Schaltventil zugeordnet ist.

### Beschreibung der Ausführungsformen

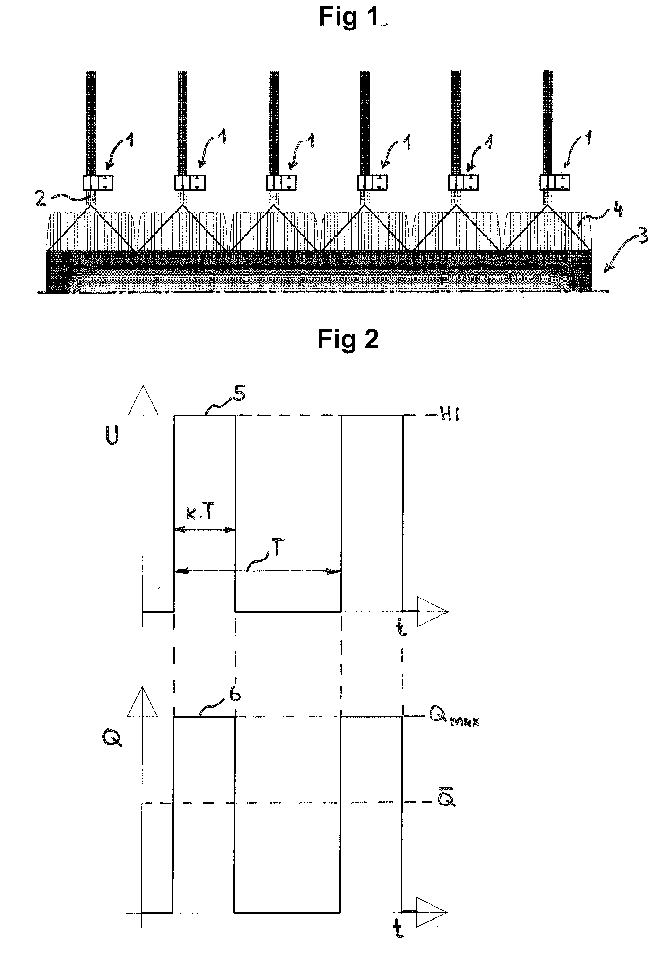

In Fig 1 sind sechs Kühldüsen 2 über die Breitseite einer Bramme 3 verteilt angeordnet, wobei jeder Kühldüse 2 ein Schaltventil 1 zugeordnet ist. Da an jeder Kühldüse 2 nach dem Öffnen des Schaltventils 1 der Systemdruck des Kühlmediums Wasser anliegt, ist die Wasserverteilung 4 bzw. das Spritzbild auch für unterschiedliche Werte von κ des in Fig 2 dargestellten pulsweiten modulierten (PWM) Steuersignals 5 konstant. Für ein gleichmäßiges Spritzbild auch bei höheren Grundfrequenzen *f* =1/*T* des PWM Steuersignals 5 ist die Austrittsöffnung des Schaltventils in Durchflussrichtung des Kühlmediums unmittelbar der Kühldüse 2 vorgelagert.

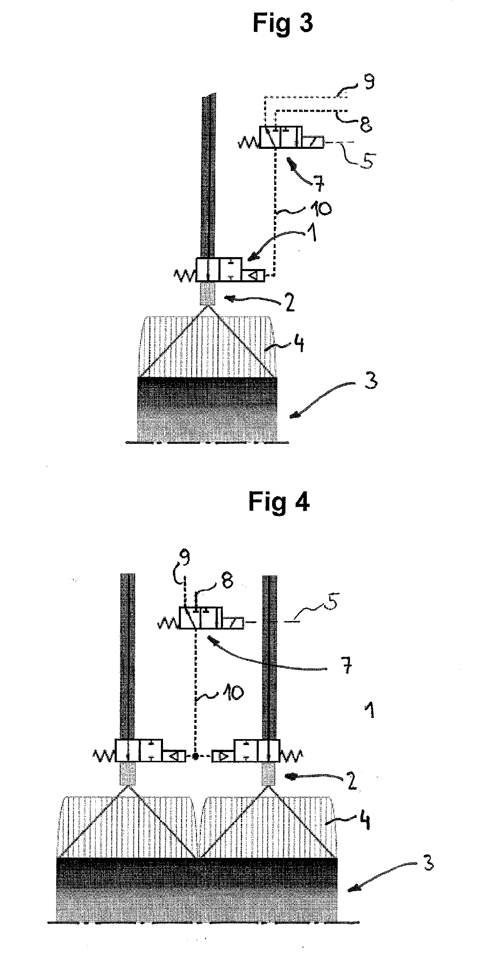

In Fig 2 ist das PWM Steuersignal 5, mit dem ein Schaltventil angesteuert wird, dargestellt. Höhere Frequenzen führen zu niedrigerer Temperaturfluktuation an der gekühlten Strangoberfläche, erfordern aber einen höheren Energieaufwand für die Ansteuerung der Schaltventile und sehr kleine Pulsweiten κ lassen sich dann nicht mehr ohne Beeinträchtigung des Spritzbildes schalten. Die Gesetze der Strangerstarrung beim Stranggießen ergeben, dass bei gleicher Wiedererwärmung die Periodendauer *T =1*/*f* des pulsweitenmodulierten Schaltens proportional zum Strangalter gewählt werden muss. Dies legt nahe, die Schaltfrequenz über die Länge der Stranggießanlage gemäß dieser Regel zu stellen. Für gängige Anwendungen beim Kühlen von Stahlsträngen in Stranggießanlagen hat sich eine Trägerfrequenz f von ca. 1 Hz in den vorderen Bereichen des Stranges bewährt. Wie dargestellt, handelt es sich beim Steuersignal 5 um ein binäres Signal, das entweder einen HI Wert (logisch Eins) oder einen LO (logisch Null) Wert annehmen kann. Gemäß Fig 2 führt ein HI Wert zu einer geöffneten Stellung des Schaltelements des Schaltventils 1, sodass die maximale Durchflussmenge durch das Schaltventil 1 über die Kühldüse 2 auf den Strang 3 gespritzt wird. Es wäre jedoch auch möglich, dass ein HI Wert des Steuersignals mit einer geschlossenen Stellung des Schaltelements korrespondiert (vgl. Fig 3). Andererseits bewirkt ein LO Wert ein Schließen des Schaltelements, sodass der Durchfluss gesperrt wird. Verschmiert betrachtet erfährt der Strang 3 eine mittlere Durchflussmenge *Q̅.* Das sogenannte Pulsweiten-Verhältnis κ definiert den Anteil des PWM Ansteuersignals, der einen HI Wert aufweist; mit anderen Worten: ein Wert κ von 100% bewirkt, dass das Ansteuersignal ständig HI ist, ein Wert κ von 50% bewirkt, dass das Ansteuersignal jeweils zur Hälfte HI und LO ist, und ein Wert κ von 0% bewirkt, dass das Ansteuersignal ständig LO ist.

In Fig 3 ist eine Anordnung aus einem Schaltventil 1, einem pneumatischen Vorsteuerventil 7 und einer Kühldüse 2 zur Kühlung eines Strangs 3 dargestellt. Dabei liegt am pneumatischen 3/2 Wege Vorsteuerventil 7 einerseits der pneumatische Hochdruck 8 und andererseits ein Niederdruck 9 an. Das Vorsteuerventil wird elektrisch mit einem PWM Steuersignal 5 angesteuert, sodass als Vorsteuerdruck 10 entweder der Hochdruck 8 oder der Niederdruck 9 am Schaltventil anliegt. So wie dargestellt liegt im unbestromten, d.h. das Steuersignal ist LO, Zustand des Vorsteuerventils 7 als Vorsteuerdruck 10 der Niederdruck 9 an, sodass das Vorsteuerventil 7 geöffnet ist und das Kühlmedium Wasser über die Kühldüse 2 auf den Strang 3 gespritzt wird.

Fig 4 zeigt eine ähnliche Anordnung wie Fig 3, wobei jedoch ein pneumatische 3/2 Wege Vorsteuerventil 7 zwei Schaltventile 1 ansteuert. Wiederum liegt der Niederdruck 9 als Steuerdruck 10 an, sodass beide Schaltventile 1 das Kühlmedium über die Spritzdüsen 2 auf den Strang 3 spritzen.

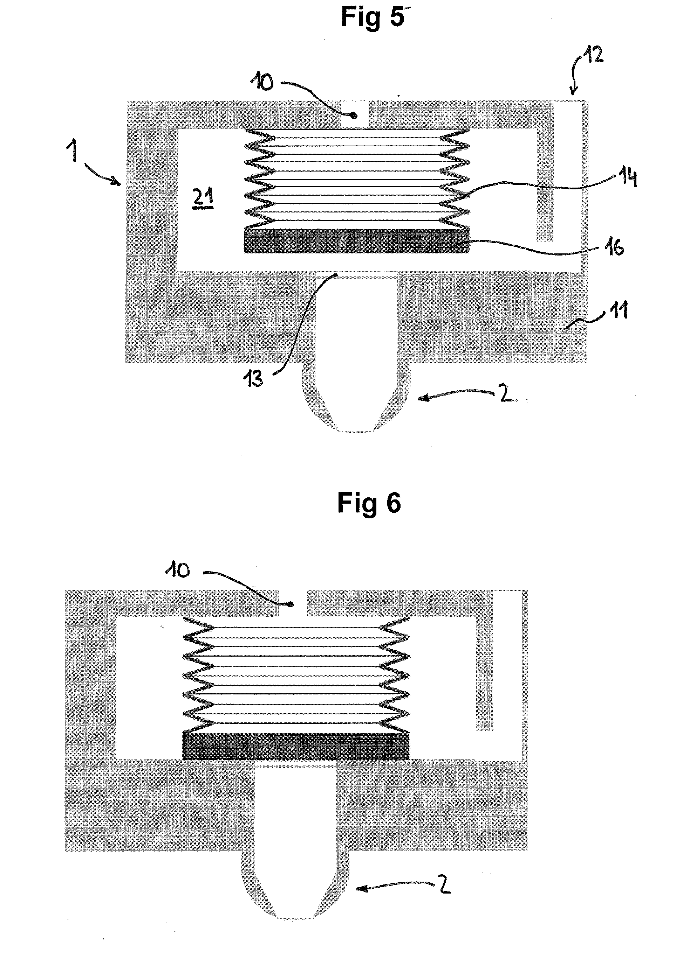

Die Fig 5 und 6 zeigen eine Ausführungsform eines Schaltventils 1 in je einer geöffneten und einer geschlossenen Stellung, wobei das Schaltventil als ein Sitzventil mit einem Steuerkolben 16 ausgebildet ist. Im Inneren des Ventilgehäuses 11 ist ein Membranbalg 14 einerseits mit dem Gehäuse 11 und andererseits mit dem Steuerkolben 16 verbunden, wobei der Membranbalg 14 den Steuerkolben führt, die Steuerluft 10 vom Kühlwasser 21 trennt und im nicht betätigten Zustand des Schaltventils zusätzlich den Steuerkolben 16 in der geschlossenen Stellung hält. Erreicht der Druck des Kühlmediums einen vorbestimmten Wert, so öffnet der Steuerkolben selbsttätig (sog. "fall safe operation"). In der in Fig 5 gezeigten geöffneten Stellung kann das Kühlmedium 21 ungehindert von einer Eintrittsöffnung 12 zur Austrittsöffnung 13 strömen, sodass es durch die Kühldüse 2 auf den Strang aufgespritzt wird. Die Fig 6 zeigt die geschlossene Stellung, wobei als Vorsteuerdruck 10 ein Hochdruck anliegt, sodass der Steuerkolben 16 die Austrittsöffnung 13 verschließt. Das Vorsteuerventil zur Vorsteuerung des Schaltventils 1 mit dem Vorsteuerdruck 10 wurde aus Gründen der Übersichtlichkeit nicht dargestellt.

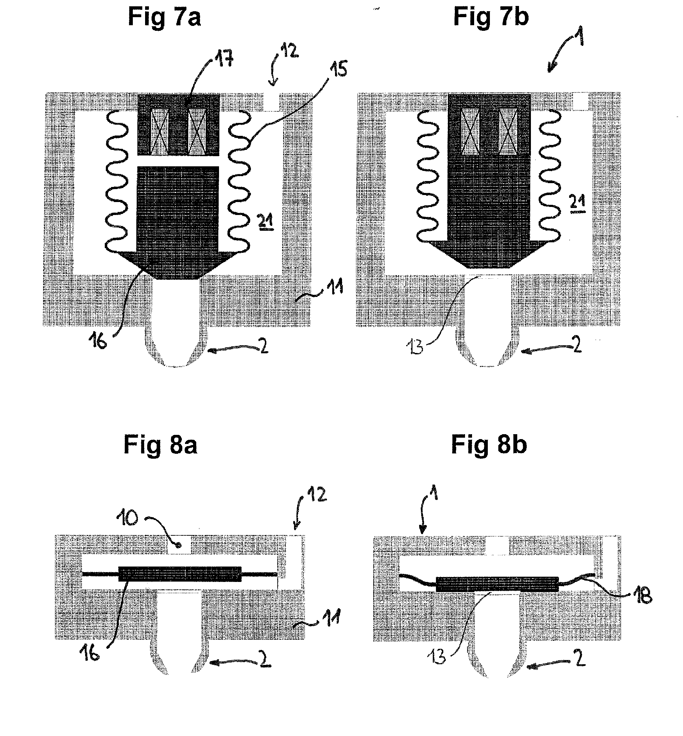

In den Fig 7a und 7b ist eine weitere Ausführungsform eines Schaltventils 1 jeweils in einer geschlossenen und einer geöffneten Stellung dargestellt. Dabei wird der Steuerkolben 16 direkt - konkret elektromagnetisch - betätigt, wobei im Falle der Betätigung (siehe Fig 7b) der Steuerkolben 16 zum Elektromagnet 17 gezogen wird. Dabei wird die Federkraft des Wellenbalgs 15 überwunden, sodass das Kühlmedium ungehindert durch das Ventilgehäuse 11 zur Kühldüse 2 strömen kann. In Fig 7a wirkt keine elektromagnetische Kraft auf den Steuerkolben 16, sodass der Steuerkolben 16 vom Wellenbalg 15 gegen die Auslassöffnung des Ventilgehäuses 11 gepresst wird. In diesem Fall kann somit kein Kühlmedium zur Kühldüse 2 strömen.

Die Fig 8a und 8b zeigen eine weitere Ausführungsform eines Schaltventils 1 jeweils in einer geöffneten und einer geschlossenen Stellung. Das Schaltventil 1 wird wiederum mittels eines pneumatischen oder hydraulischen Vorsteuerventils, auf dessen Darstellung verzichtet wurde, vorgesteuert, sodass der plattenförmige Steuerkolben 16 in der geschlossenen Stellung des Schaltventils 1 gegen die Auslassöffnung 13 des Ventilgehäuses 11 gepresst wird. In der geöffneten Stellung liegt der Umgebungsdruck (oder ein gegenüber dem Umgebungsdruck leicht erhöhter Druck) als Vorsteuerdruck 10 an, sodass der Steuerkolben 16 über die Membran 18 in die geöffnete Stellung zurückgezogen wird.

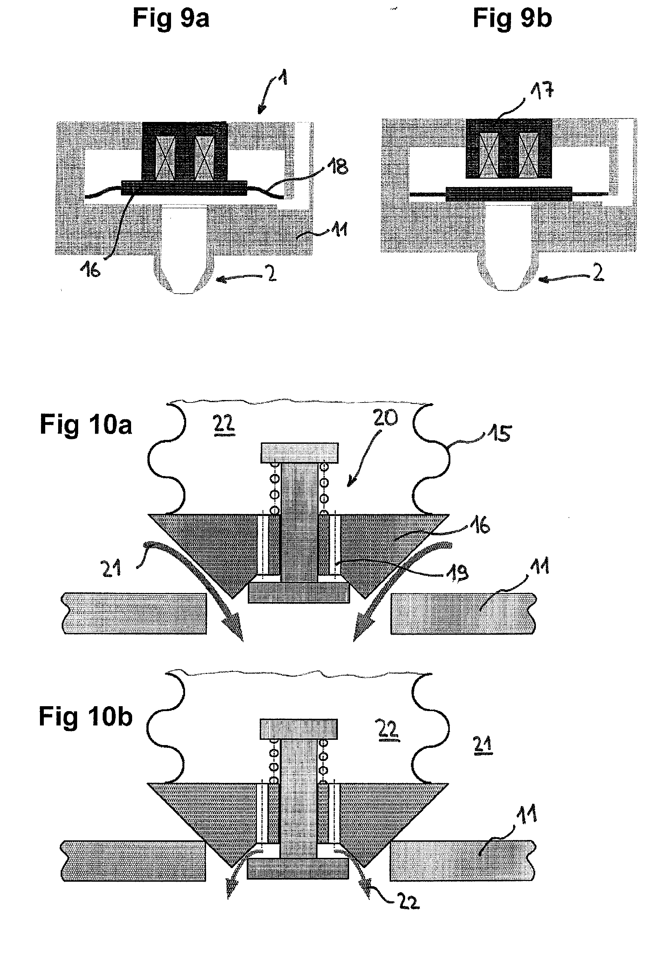

In den Fig 9a und 9b wird ein direkt betätigtes Schaltventil 1 gezeigt, wobei der Steuerkolben 16 über einen Elektromagnet 17 betätigt wird. In diesem Fall muss die Membran 18 lediglich den Steuerkolben 16 führen; eine Abdichtfunktion ist in diesem Fall nicht notwendig, sofern der Magnet "nass" betrieben werden kann. Hierbei könnte die Membran 18 auch durch eine Feder ersetzt werden.

Die Fig 10a und 10b zeigen ein Detail für einen Steuerkolben 16 eines pneumatisch vorgesteuerten Schaltventils, wobei die Steuerluft 22 durch Bohrungen 19 im Steuerkolben 16 zum Ausblasen des Raums zwischen dem Schaltventil und der Kühldüse verwendet wird. Durch das Ausblasen wird das Eindringen von Schmutz, z.B. Zunder, in die Kühldüse verhindert, was sich günstig auf die Zuverlässigkeit des Schaltventils und der Kühleinrichtung auswirkt. Außerdem werden Ablagerungen, z.B. Kalk, im Raum zwischen Ventilsitz und der Kühldüse vermieden.

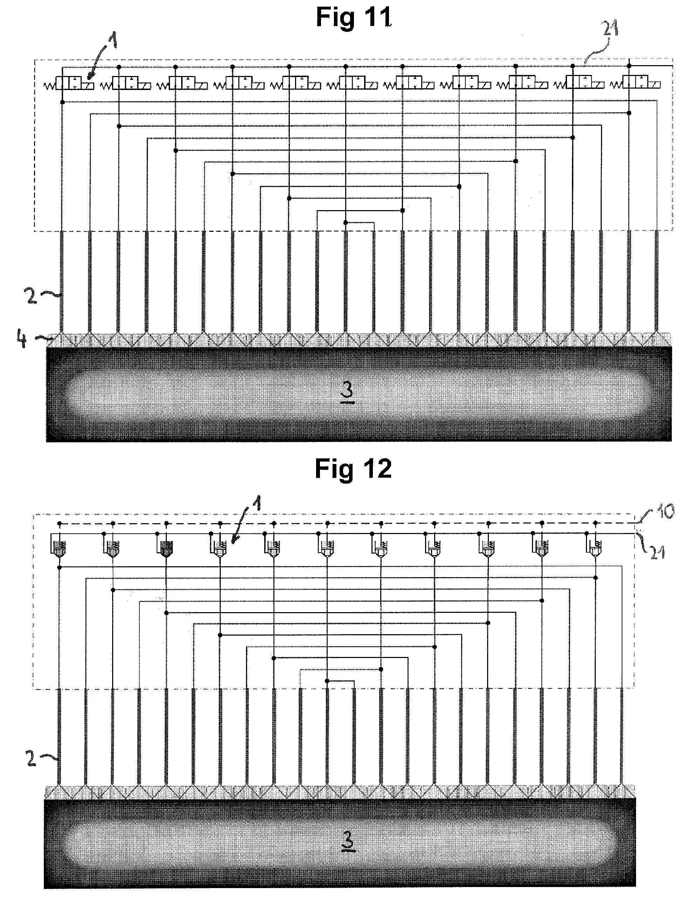

Die Fig 11 und 12 zeigen eine Anordnung von 22 Kühldüsen, die gleichmäßig über die Breitseite einer Bramme 3 verteilt sind, wobei jeweils zwei Kühldüsen 2 symmetrisch zur Mittelachse der Breitseite angeordnet sind und diesen beiden Kühldüsen ein Schaltventil 1 zugeordnet ist. Diese Anordnung bewirkt einerseits symmetrische Temperaturbedingungen, andererseits wird die Anzahl der Schaltventile 1 bei genügend großer Auflösung der Kühlmittelverteilung 4 reduziert. Zur Beeinflussung asymmetrischer Erstarrungsbedingungen kann es jedoch vorteilhaft sein, jeder Kühldüse ein einziges Schaltventil 1 zuzuordnen. Bei dieser Ausführungsform werden alle Schaltventile 1 von einem gemeinsamen Steuerdruck 10 beaufschlagt, wobei das unterschiedliche Öffnen bzw. Schließen eines Schaltelements eines Schaltventils 1 durch unterschiedlich gewählte Federsteifigkeiten erreicht wird. Natürlich ist die Erfindung keineswegs auf Brammenformate beschränkt; vielmehr ist sie auch auf Knüppel-, Vorblock- und sogenannte "beam blank" Formate anwendbar.

### Bezugszeichenliste

- 1: Schaltventil
- 2: Kühldüse
- 3: Strang
- 4: Wasserverteilung
- 5: Steuersignal
- 6: Durchflussmenge
- 7: Vorsteuerventil
- 8: Hochdruck
- 9: Niederdruck
- 10: Steuerdruck
- 11: Ventilgehäuse
- 12: Eintrittsöffnung
- 13: Austrittsöffnung
- 14: Membranbalg
- 15: Wellenbalg
- 16: Steuerkolben
- 17: Elektromagnet
- 18: Membran
- 19: Bohrung
- 20: Rückschlagventil
- 21: Kühlwasser
- 22: Steuerluft
- e: Regelfehler
- f: Trägerfrequenz
- κ: Pulsweiten Verhältnis
- u: Stellgröße
- T_{PWM}: Periodendauer
- T: Temperatur

## Patentansprüche

1. Verfahren zur Kühlung eines metallischen Strangs (13), vorzugsweise eines Stahlstrangs, in einer Strangführung einer Stranggießmaschine, aufweisend folgende Verfahrensschritte:
- aktives Ansteuern eines schaltbaren Schaltventils (1) durch ein binäres Steuersignal (5), wobei die Ansteuerung in Abhängigkeit einer gewünschten Kühlleistung erfolgt;
- Betätigen eines Schaltelements (16) des Schaltventils in Abhängigkeit des Steuersignals (5), wobei das Schaltelement (16) in Abhängigkeit des Steuersignals (5) von einer geschlossenen Stellung in eine geöffnete Stellung oder vice versa gebracht wird, und der Durchfluss eines Kühlmediums (21) durch das Schaltventil (1) bei einer geöffneten Stellung des Schaltelements (16) geöffnet und bei einer geschlossenen Stellung des Schaltelements (16) geschlossen ist; anschließend
- intermittierendes Ausbringen des Kühlmediums (21) über eine Kühldüse (2) auf den Strang (3) .

2. Verfahren nach Anspruch 1, **dadurch gekennzeichnet, dass** das binäre Steuersignal (5) ein pulsweitenmoduliertes (PWM) Steuersignal (5) ist.

3. Verfahren nach einem der Ansprüche 1 bis 2, **dadurch gekennzeichnet, dass** das Schaltelement (16) direkt, insbesondere elektromagnetisch, betätigt wird.

4. Verfahren nach einem der Ansprüche 1 bis 2, **dadurch gekennzeichnet, dass** das Schaltelement (16) indirekt, insbesondere pneumatisch oder hydraulisch, betätigt wird.

5. Verfahren nach Anspruch 4, **dadurch gekennzeichnet, dass** das Schaltventil (1) pneumatisch vorgesteuert wird, wobei der pneumatische Vorsteuerdruck (10) alternativ zwei unterschiedliche Druckniveaus (8,9) verbindet, wobei vorzugsweise das niedrigere Druckniveau (9) größer als der Umgebungsdruck ist.

6. Verfahren nach Anspruch 2, **dadurch gekennzeichnet, dass** die Ansteuerung zumindest eines aus der Gruppe einer Trägerfrequenz (f) des pulsweitenmodulierten Steuersignals (5) und eines Pulsweiten-Verhältnisses (κ) des pulsweitenmodulierten Steuersignals (5) in Abhängigkeit von einem Strangalter oder einer Strangposition des Strangs (3) erfolgt.

7. Verfahren nach einem der vorhergehenden Ansprüche, **dadurch gekennzeichnet, dass** das der Druck des Kühlmediums (21) in Abhängigkeit der gewünschten Kühlleistung verändert wird.

8. Verfahren nach Anspruch 1, **dadurch gekennzeichnet, dass** vor der Ansteuerung des aktiv schaltbaren Schaltventils (1) durch ein binäres Steuersignal (5) folgende Verfahrensschritte durchgeführt werden:
- Ermitteln einer Temperatur T des Strangs (3), vorzugsweise einer Oberflächentemperatur des Strangs (3) in einem Auftreffbereich des aus der Kühldüse (2) austretenden Kühlmediums (21) auf den Strang (3);
- Bestimmen eines Regelfehlers *e*=*T_{Soll}-T* unter Berücksichtigung einer Solltemperatur *Tₛₒₗₗ* des Strangs (3);
- Berechnen einer Stellgröße u mittels einer Regeleinrichtung in Abhängigkeit des Regelfehlers e, wobei die gewünschte Kühlleistung über das Steuersignal (5) in Abhängigkeit der Stellgröße u eingestellt wird.

9. Verfahren nach einem der vorhergehenden Ansprüche, **dadurch gekennzeichnet, dass** der Raum zwischen dem Schaltventil (1) und der Kühldüse (2) in der geschlossenen Stellung des Schaltelements (16) mit Luft (22) ausgeblasen wird.

10. Schaltventil (1) zum intermittierenden Öffnen und Schließen eines Volumenstroms eines Kühlmediums (21), das zur Kühlung eines metallischen Strangs (3) in einer Strangführung einer Stranggießmaschine geeignet ist, aufweisend:
- ein druckdichtes Ventilgehäuse (11), umfassend zumindest eine Eintrittsöffnung (12) zum Einführen des Kühlmediums (21) in das Ventilgehäuse (11) und zumindest eine Austrittsöffnung (13) zum Ausführen des Kühlmediums (21) aus dem Ventilgehäuse (11);
- ein Schaltelement (16) zum Öffnen und Schließen der Austrittsöffnung (13), wobei das Schaltelement (16) gegenüber dem Ventilgehäuse (11) beweglich ausgebildet ist; und
- eine Betätigungseinrichtung (7,17) zum Betätigen des Schaltelements (16) in Abhängigkeit eines Steuersignals (5).

11. Vorrichtung nach Anspruch 10, **dadurch gekennzeichnet, dass** die Austrittsöffnung (13) mit einer Kühldüse (2) zum Ausbringen des Kühlmediums (21) auf den Strang (3) verbunden ist, wobei vorzugsweise die Austrittsöffnung (13) unmittelbar vor der Kühldüse (2) angeordnet ist.

12. Vorrichtung nach Anspruch 10, **dadurch gekennzeichnet, dass** die Austrittsöffnung (13) mit mehreren Kühldüsen (2) zum Ausbringen des Kühlmediums (21) auf den Strang (3) verbunden ist.

13. Vorrichtung nach Anspruch 10, **dadurch gekennzeichnet, dass** das Schaltelement (16) einen Steuerkolben (16) umfasst, wobei ein Balg (14,15) oder eine Membran (18) den Steuerkolben (16) gegenüber dem Ventilgehäuse (11) führt und gegebenenfalls abdichtet.

14. Vorrichtung nach einem der Ansprüche 10 bis 13, **dadurch gekennzeichnet, dass** die Betätigungseinrichtung (7,17) als eine elektrische Betätigungseinrichtung, vorzugsweise ein Elektromagnet (17), ausgebildet ist.

15. Vorrichtung nach einem der Ansprüche 10 bis 13, **dadurch gekennzeichnet, dass** die Betätigungseinrichtung (7,17) als eine pneumatische Betätigungseinrichtung, vorzugsweise ein 3/2 Wege Pneumatikventil (7) oder zwei 2/2 Wege Pneumatikventile (7), ausgebildet ist.

16. Vorrichtung nach Anspruch 15, **dadurch gekennzeichnet, dass** der Steuerkolben (16) wenigstens eine Ausblasöffnung (19) zum Ausblasen des Raums zwischen dem Schaltventil (1) und der Kühldüse (2) aufweist.

17. Vorrichtung nach Anspruch 16, **dadurch gekennzeichnet, dass** der Ausblasöffnung (19) ein Rückschlagventil (20) zugeordnet ist.

18. Kühlbalken nach einem der Ansprüche 10 bis 17, **dadurch gekennzeichnet, dass** mehrere Schaltventile (1) und Kühldüsen (2) nach einem der Ansprüche 10 bis 17 zu einer baulichen Einheit zusammengefasst und in einem Rollenspalt der Strangführung angeordnet sind.
